# EUROPÄISCHE PATENTSCHRIFT

(11) **EP 2 826 651 B1**
(45) Veröffentlichungstag und Bekanntmachung des Hinweises auf die Patenterteilung: **02.11.2016**
(21) Anmeldenummer: 14175991.0
(22) Anmeldetag: 16.07.2013
(51) Int. Cl.: B60J 7/057, B60J 7/02

(54) **Rahmen eines Fahrzeugschiebedachs mit Kabelkanälen**
Frame of a vehicle sliding roof with cable ducts
Cadre d'un toit coulissant de véhicule avec caniveaux de câbles

(43) Veröffentlichungstag der Anmeldung: 21.01.2015
(62) Teilanmeldung aus: 13176728.7
(73) Patentinhaber: Webasto SE, 82131 Stockdorf (DE)
(72) Erfinder: Reinsch, Burkhard, 87600 Kaufbeuren (DE); Mathias, Rainer, 82327 Tutzing (DE)
(74) Vertreter: advotec.

(56) Entgegenhaltungen:
- DE-C1- 4 422 646
- FR-A1- 2 771 970
- US-B1- 6 582 014

## Beschreibung

Die Erfindung betrifft einen Rahmen eines Fahrzeugschiebedachs mit den Merkmalen des Oberbegriffs des Patentanspruches 1.

Ein derartiger Rahmen ist aus der Druckschrift DE 44 22 646 C1 bekannt und dient zum Lagern und Antreiben eines Deckelelements, mittels dessen wahlweise eine Öffnung des betreffenden Fahrzeugdachs verschlossen oder zumindest teilweise freigegeben werden kann. Der Rahmen umfasst einen beispielsweise als Rahmenvorderteil ausgebildeten Rahmenkörper, in dem zwei Kabelkanäle ausgebildet sind, die jeweils zur Führung eines drucksteifen Antriebskabels dienen. Die Antriebskabel sind mittels eines Antriebsmotors betätigbar, der ebenfalls an dem Rahmenvorderteil montiert ist, und führten jeweils zu einem Antriebsschlitten, der in einer sich in Fahrzeuglängsrichtung erstreckenden Führungsschiene verschiebbar geführt ist und zum Verstellen des Deckelelements mit einem an dem Deckelelement ausgebildeten Träger zusammenwirkt. Die Kabelkanäle sind entlang ihrer Erstreckung so ausgebildet, dass obere und untere Wandabschnitte das betreffende Antriebskabel wechselweise umgreifen, so dass das Antriebskabel an seiner den jeweiligen Wandabschnitt abgewandten Seite durch einen betreffenden Freischnitt freiliegt. Zudem sind an den Stirnseiten der Wandabschnitte jeweils Einlaufschrägen für die Antriebskabel ausgebildet.

Der Erfindung liegt die Aufgabe zugrunde, einen Rahmen der einleitend genannten Gattung zu schaffen, der sich durch ein verbessertes Laufverhalten eines Antriebskabels in einem Kabelkanal auszeichnet und insbesondere auch eine geräuscharme Führung des Antriebskabels ermöglicht.

Diese Aufgabe ist erfindungsgemäß durch den Rahmen mit den Merkmalen des Patentanspruches 1 gelöst.

Der Kabelkanal weist einen Lastabschnitt für einen belasteten Abschnitt des Antriebskabels und einen Freilaufabschnitt für einen auslaufenden, nicht belasteten Abschnitt des jeweiligen Antriebskabels auf. Der Lastabschnitt ist derjenige Abschnitt, der zwischen einer Antriebseinrichtung für das Antriebskabel und dem angetriebenen Bauteil, beispielsweise einem Antriebsschlitten des Schiebedachdeckels, angeordnet ist, wohingegen der Freilaufabschnitt derjenige Bereich des Kabelkanals ist, der bezogen auf die Antriebseinrichtung dem Lastabschnitt abgewandt ist. In dem Lastabschnitt haben die Wandabschnitte eine maximale axiale Länge von etwa 11 mm und in dem Freilaufabschnitt haben die Wandabschnitte jeweils eine maximale axiale Länge von etwa 15 mm. Damit kann wirkungsvoll einem Ausschlaufen des Antriebskabels entgegengewirkt werden.

Die oberen Wandabschnitte und die unteren Wandabschnitte können jeweils an mindestens einem freien Rand mit einer Einlaufschräge versehen sein.

Die Einlaufschrägen der Wandabschnitte des Rahmens können derart ausgelegt sein, dass sie jeweils ausgehend von einem jeweiligen teilzylindrischen Mittelbereich in Richtung des Kanalverlaufs über einen ersten Krümmungsbereich in einen zweiten, zu dem ersten Krümmungsbereich gegenläufigen Krümmungsbereich übergehen.

Bei dem Rahmen nach der Erfindung können somit die Einlaufschrägen jeweils als stetige Übergänge zwischen dem Rand des Wandabschnitts und dem Mittelbereich des Wandabschnitts ausgebildet sein, der den eigentlichen Führungsbereich darstellt. Bei den erfindungsgemäß ausgebildeten Einlaufschrägen liegen also keine Ecklinien bzw. Kanten vor. Damit ist gewährleistet, dass das Antriebskabel geräuscharm läuft. Auch kann das Risiko eines Verhakens des jeweiligen Antriebskabels von einem zu dem nächsten Wandabschnitt minimiert werden.

Die Wandabschnitte bilden Führungselemente, die das Antriebskabel in dem Kabelkanal halten. Jeder Wandabschnitt liegt gegenüber einem Freischnitt, der ein Kanalfenster darstellt, das das betreffende Antriebskabel freigibt bzw. sichtbar macht.

Bei einer bevorzugten Ausführungsform des Rahmens, die ein besonders günstiges Laufverhalten für das Antriebskabel bietet, hat der erste Krümmungsbereich einen Krümmungsradius von etwa 1,0 mm bis 2,0 mm, insbesondere einen Krümmungsradius von etwa 1,5 mm, wohingegen der zweite Krümmungsbereich einen Krümmungsradius von etwa 0,1 mm bis 0,5 mm, insbesondere von 0,3 mm hat.

Die Krümmungsradien und die Krümmungen beziehen sich jeweils auf die axiale Richtung der Wandabschnitte, d. h. auf die Laufrichtung des in den Kabelkanal geführten Antriebskabels bzw. den Verlauf des Kabelkanals.

Des Weiteren kann sich an den zweiten Krümmungsbereich ein Zylinderflächenbereich anschließen, der den Abschluss der jeweiligen Einlaufschräge bildet und der vorzugsweise eine axiale Breite von etwa 0,5 mm bis 0,15 mm, insbesondere von 0,1 mm hat.

Durch die Einlaufschrägen resultiert beispielsweise bei einem Kanaldurchmesser von etwa 5,1 mm bis 5,5 mm, vorzugsweise von etwa 5,3 mm, eine Kanalaufweitung von etwa 0,2 mm bis 0,8 mm, vorzugsweise von 0,6 mm über eine Weglänge von etwa 1 mm bis 2 mm.

Insbesondere in gekrümmten Abschnitten des Kabelkanals, d. h. Abschnitten mit zumindest angenähert bogenförmigem Verlauf, wie beispielsweise in Eckbereichen des Rahmenkörpers, haben bei einer bevorzugten Ausführungsform des Rahmens nach der Erfindung in Kanalrichtung aufeinanderfolgende, obere und untere Wandabschnitte miteinander fluchtende, stirnseitige Ränder, die eine Ebene aufspannen, die gegenüber einer Radialebene des jeweiligen oberen oder unteren Wandabschnitts angestellt ist, und zwar vorzugsweise mit einem Winkel zwischen 5° und 9°. So ist gewährleistet, dass ein kontinuierlicher Übergang zwischen den den Wandabschnitten zugeordneten Kanalabschnitten erfolgt. Die Einlaufschrägen grenzen damit in diesen Kanalabschnitten an zwickelartig ausgebildete Entformungsflächen, die zwischen aufeinanderfolgenden, jeweils einem oberen bzw. unteren Wandabschnitt zugeordneten Kanalsegmenten angeordnet sind.

Eine spezielle Ausführungsform eines Rahmens nach der Erfindung weist zwei Kabelkanäle auf, die jeweils zu einer sich in Fahrzeuglängsrichtung erstreckenden Führungsschiene führen können. Bei einer Projektion rechtwinklig zur Ebene des Rahmenkörpers können sich die Kabelkanäle in einem Kreuzungsbereich kreuzen. Um in diesem Kreuzungsbereich eine zuverlässige Führung der dann zwei Antriebskabel zu gewährleisten, ist einer der beiden Kabelkanäle in dem Kreuzungsbereich mit einem von einer Kanalbrücke unterbrochenen Freischnitt versehen. Die Kanalbrücke verhindert, dass das betreffende Antriebskabel im Kreuzungsbereich ausschlauft, d. h. bei Last über diesem Freischnitt seine gewünschte Führungsbahn verlässt, was zu Störungen im Betrieb des betreffenden Schiebedachs führen könnte.

Aus fertigungstechnischen Gründen hat die Kanalbrücke insbesondere bei einem als Kunststoffspritzgießteil hergestellten Rahmenkörper eine Achse, die parallel zur Achse des anderen der beiden Kabelkanäle in dem Kreuzungsbereich angeordnet ist.

Auch können die Ränder des Freischnitts, der von der Kanalbrücke unterbrochen ist, parallel zur Achse des anderen der beiden Kabelkanäle in dem Kreuzungsbereich verlaufen.

Ein hinsichtlich Laufverhalten optimierter Kreuzungsbereich liegt vor, wenn sich die beiden Kabelkanäle dort unter einem Winkel von mindestens 35° kreuzen. Um den Platzbedarf gering zu halten, sollte der Kreuzungswinkel aber nicht größer als 45° sein.

Um dem Rahmenkörper eine hinreichende Stabilität zu verleihen, ist es vorteilhaft, wenn die beiden Kabelkanäle bei einem parallelen Verlauf in der gleichen Ebene, die etwa parallel zur Ebene des Rahmenkörpers verläuft, einen Abstand von mindestens 7,5 mm haben.

Des Weiteren ist es vorteilhaft, wenn ein in einem Eckbereich des Rahmenkörpers angeordneter Wasserablaufstutzen mit vorgegebenem Durchmesser so bezüglich des Kabelkanals angeordnet ist, dass die Achse des Wasserablaufstutzens die Achse des mit dem Wasserablaufstutzen fluchtenden Freischnitts des Kabelkanals in diesem Eckbereich in einem zumindest weitgehend rechten Winkel schneidet. Damit kann der Freischnitt kurz gehalten und das Risiko eines Ausschlaufens des betreffenden Antriebskabels durch diesen Freischnitt klein gehalten werden.

Um das Risiko eines Ausschlaufens des Antriebskabels in dem Eckbereich des Rahmenkörpers durch einen Freischnitt weiter zu minimieren, kann auf den Rahmenkörper in einem insbesondere einen Wasserablaufstutzen aufweisenden Eckbereich ein Abdeckelement aufgesetzt sein, das einen zwischen zwei oberen Wandabschnitten oder zwei unteren Wandabschnitten angeordneten oberen bzw. unteren Freischnitt zumindest teilweise abdeckt, der mit dem Wasserablaufstutzen fluchtet. Das betreffende Antriebskabel kann sich dann also an dem Abdeckelement abstützen.

Zweckmäßigerweise ist das Abdeckelement an dem Rahmenkörper verrastet. Damit ist eine einfache Montage des Abdeckelements möglich.

Insbesondere hinsichtlich Leichtbau ist es vorteilhaft, wenn der Rahmenkörper ein nach einem Kunststoffspitzgießverfahren hergestelltes Rahmenvorderteil ist, das bezogen auf eine Rahmenlängsmittelebene beidseits jeweils an eine sich in Fahrzeuglängsrichtung erstreckende Führungsschiene grenzt, wobei der Kabelkanal in einem Stoßbereich mit der jeweiligen Führungsschiene eine konische Aufweitung aufweist, und zwar beispielsweise von einem Ausgangsdurchmesser des Kabelkanals von etwa 5,1 mm bis 5,5 mm auf einen Durchmesser von 7 mm bis 8 mm, vorzugsweise auf etwa 7,3 mm, über eine Strecke von vorzugsweise mindestens 5,2 mm.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Rahmens nach der Erfindung sind in der Zeichnung schematisch vereinfacht dargestellt und werden in der nachfolgenden Beschreibung näher erläutert. Es zeigt:
- Figur 1: eine Draufsicht auf ein Rahmenvorderteil eines Rahmens nach der Erfindung;
- Figur 2: eine vergrößerte Ansicht eines Eckbereichs II des Rahmenvorderteils nach Figur 1;
- Figur 3: eine Unteransicht des Eckbereichs;
- Figur 4: eine vergrößerte Ansicht eines Kabelkanalkreuzungsbereichs IV des Rahmenvorderteils nach Figur 1;
- Figur 5: eine Unteransicht des Kreuzungsbereichs;
- Figur 6: eine vergrößerte Darstellung eines Abschnitts eines Kabelkanals des Rahmenvorderteils;
- Figur 7: einen Schnitt durch den Kabelkanal gemäß einer Linie VII-VII in Figur 6;
- Figur 8: eine vergrößerte Ansicht des Bereichs VIII-VIII in Figur 7;
- Figur 9: eine Draufsicht auf eine alternative Ausführungsform eines Rahmenvorderteils eines Rahmens nach der Erfindung;
- Figur 10: eine vergrößerte Darstellung eines Eckbereichs X des Rahmenvorderteils nach Figur 9; und
- Figur 11: eine Unteransicht des Eckbereichs.

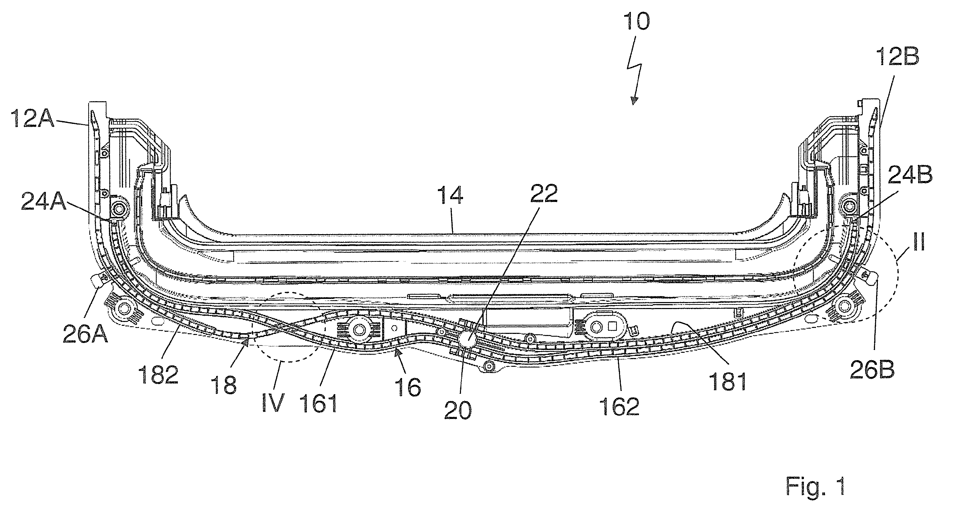

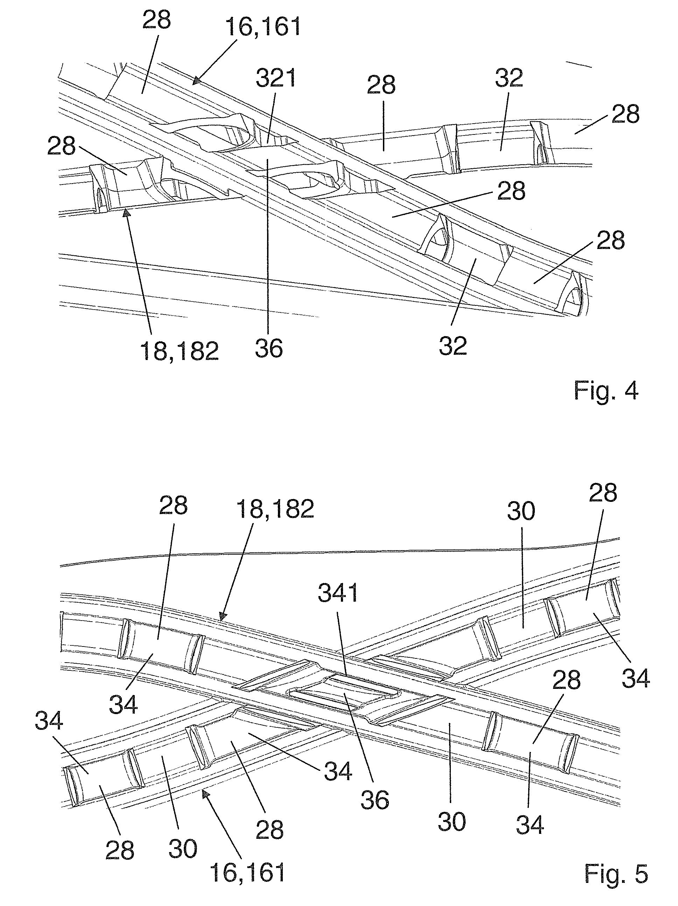

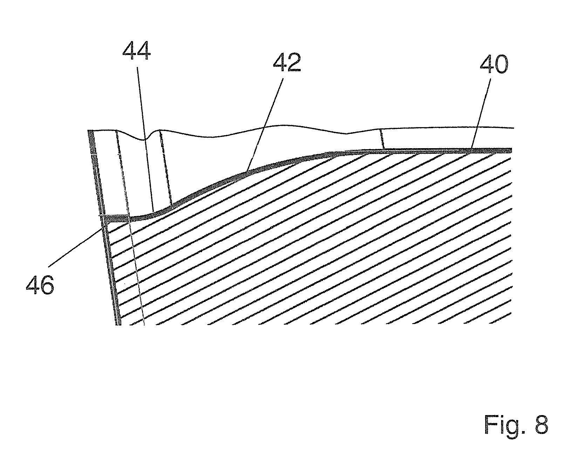

In den Figuren 1 bis 8 ist ein Rahmenvorderteil 10 eines ansonsten nicht näher dargestellten Rahmens eines Fahrzeugschiebedachs dargestellt. Das Schiebedach weist, wie üblich, ein Deckelelement zum wahlweisen Öffnen oder Schließen einer Dachöffnung auf und wird über den Rahmen an den Fahrzeugaufbau angebunden.

Gemäß der in Figur 1 gezeigten Darstellung weist das einen Rahmenkörper bildende und als Kunststoffspritzgießteil ausgebildete Rahmenvorderteil 10 einen zumindest annähernd U-förmigen Grundriss auf, wobei sich die freien Schenkel 12A und 12B in Fahrzeuglängsrichtung erstrecken und mit ihren freien Stirnseiten im montierten Zustand an eine jeweilige, nicht näher dargestellte Führungsschiene für eine Antriebsmechanik des Deckelelements grenzen. Die beiden freien Schenkel 12A und 12B sind über einen sich in Fahrzeugquerrichtung erstreckenden Basisschenkel 14 miteinander verbunden.

Das Rahmenvorderteil 10, das in Einbaulage an einen vorderen Rand der betreffenden Dachöffnung grenzt, weist zwei Kabelkanäle 16 und 18 auf, in denen jeweils ein drucksteifes, vorzugsweise aus einem Steigungskabel gebildetes Antriebskabel geführt ist, welches im Bereich der jeweiligen Führungsschiene mit der Antriebsmechanik bzw. einem Antriebsschlitten der betreffenden Antriebsmechanik verbunden ist. Zur Betätigung der Antriebskabel kann an dem Basisschenkel 14 des Rahmenvorderteils 10 in einem Befestigungsbereich 20 ein Antriebsmotor montiert werden, der ein Antriebsritzel aufweist, dessen Antriebswelle eine Ausnehmung 22 des Basisschenkels 14 des Rahmenvorderteils 10 durchgreift, die in einem mittleren Abschnitt des Basisschenkels 14 ausgebildet ist. Das Antriebsritzel steht mit den beiden in den Kabelkanälen 16 und 18 geführten Antriebskabeln in Eingriff.

Die Kabelkanäle 16 und 18 haben jeweils einen Lastabschnitt 161 und 181, der zwischen dem die Ausnehmung 22 durchgreifenden Antriebsritzel des Antriebsmotors und einem jeweiligen, als konische Aufweitung ausgebildeten Mündungsbereich 24A bzw. 24B liegt, über den das betreffende Antriebskabel in einen korrespondierenden Führungsabschnitt der betreffenden Führungsschiene geführt ist. Auf der dem jeweiligen Lastabschnitt 161 bzw. 181 abgewandten Seite der Ausnehmung 22 haben die beiden Kabelkanäle 16 und 18 jeweils einen Freilaufabschnitt 162 bzw. 182, in dem ein auslaufendes freies Ende des jeweiligen Antriebskabels geführt ist, welches mit keinem anzutreibenden Element verbunden ist.

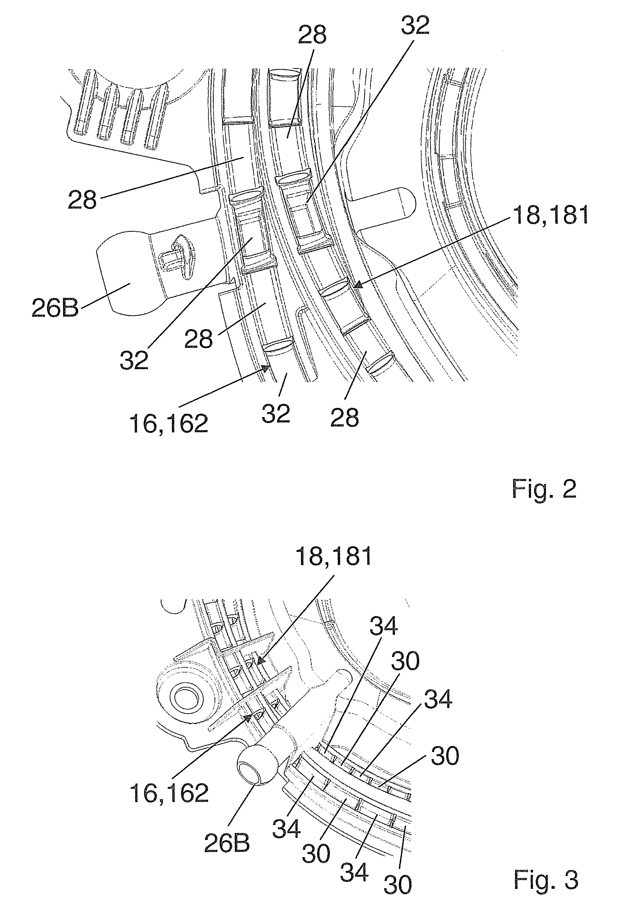

Wie insbesondere den Figuren 2 und 3 zu entnehmen ist, ist in den Eckbereichen des Rahmenvorderteils 10 jeweils ein Wasserablaufstutzen 26A bzw. 26B ausgebildet, über den etwaiges Wasser aus dem Bereich des Rahmens abgeführt werden kann und der radial nach außen weist.

Die konkrete Ausbildung der Kabelkanäle 16 und 18 wird nachfolgend anhand der Figuren 2 bis 8 beschrieben.

Die Kabelkanäle 16 und 18 sind in dem Rahmenvorderteil 10 jeweils durch obere Wandabschnitte 28 und untere Wandabschnitte 30 gebildet, die in Erstreckungsrichtung des jeweiligen Kabelkanals 16 bzw. 18 alternierend aufeinander folgen, so dass zwischen zwei aufeinander folgenden oberen Wandabschnitten 28 jeweils ein oberer Freischnitt 32 und zwischen zwei aufeinander folgenden unteren Wandabschnitten 30 jeweils ein unterer Freischnitt 34 verbleibt, über den das jeweilige, in dem betreffenden Kabelkanal 16 bzw. 18 geführte Antriebskabel freiliegt. Die Antriebskabel sind damit in den Kabelkanälen 16 und 18 abwechselnd von einem oberen Wandabschnitt 28 und andererseits von einem unteren Wandabschnitt 30 gehalten. Dies bedeutet auch, dass bezogen auf die Achse des jeweiligen Kabelkanals 16 bzw. 18 gegenüber einem oberen Wandabschnitt 28 ein unterer Freischnitt 34 liegt und gegenüber einem unteren Wandabschnitt 30 ein oberer Freischnitt 32 angeordnet ist. Bei der Herstellung des Rahmenvorderteils 10 in einem Spritzgießwerkzeug greifen entsprechend dem Verlauf der Kabelkanäle 16 und 18 entsprechende Zähne einer ersten Formhälfte und einer zweiten Formhälfte ineinander.

In den Freilaufabschnitten 162 und 182 der Kabelkanäle 16 und 18 haben die oberen Wandabschnitte 28 und die unteren Wandabschnitte 30 in axialer Richtung jeweils eine Länge von maximal 15 mm. In den Lastabschnitten 161 und 182 der Kabelkanäle 16 und 18 haben die Wandabschnitte 28 und 30 jeweils eine maximale axiale Länge von etwa 11 mm. Damit kann ein Ausschlaufen der betreffenden Antriebskabel über die oberen Freischnitte 32 und die unteren Freischnitte 34 wirkungsvoll verhindert werden bzw. das Risiko eines Ausschlaufens klein gehalten werden.

Um ein Ausschlaufen der Antriebskabel in den gekrümmten Kabelkanalabschnitten in den Eckbereichen des Rahmenvorderteils 10 zu verhindern und herstellungsbedingt im Bereich der Wasserablaufstutzen 26A und 26B die oberen Freischnitte 32 in axialer Richtung des jeweiligen Antriebskabels möglichst kurz halten zu können, haben die Wasserablaufstutzen 26A und 26B jeweils eine Achse, die in einer Projektion rechtwinkelig zur Ebene des Rahmenvorderteils 10 zumindest weitgehend rechtwinkelig zur Achse desjenigen Freischnitts 32 angeordnet ist, der einem jeweiligen Lastabschnitt 161 bzw. 181 des jeweiligen Kabelkanals 16 bzw. 18 zugeordnet ist und der mit dem jeweiligen Wasserablaufstutzen 26A und 26B jeweils fluchtet.

Wie den Figuren 1, 4 und 5 zu entnehmen ist, kreuzen sich die beiden Kabelkanäle 16 und 18 bei einer Projektion rechtwinkelig zur Ebene des Rahmenvorderteils in einem Kreuzungsbereich IV, der im Basisschenkel 14 des Rahmenvorderteils angeordnet ist. Um in dem Kreuzungsbereich ein optimales Entformungsverhalten bei der Herstellung des Rahmenvorderteils 10 in einem Spritzgießwerkzeug bei gleichzeitig minimiertem Risiko eines Ausschlaufens insbesondere des im Lastabschnitt 161 des Kabelkanals 16 angeordneten Kabelabschnitts zu gewährleisten, weist der bezogen auf die Einbaulage oben angeordnete Kabelkanal 16 im Bereich eines den unteren Kabelkanal 18 überspannenden, oberen Freischnitt 321 eine Kanalbrücke 36 auf, dessen Ränder parallel zu dem Verlauf des unteren Kabelkanals 18 im Kreuzungsbereich ausgerichtet sind. Die Ränder des Freischnitts 321, der durch die Kanalbrücke 36 unterbrochen ist, sind ebenfalls parallel zum Verlauf des unteren Kabelkanals 18 im Kreuzungsbereich ausgerichtet.

Der untere Kabelkanal 18 hat unterhalb der Kanalbrücke 36 einen unteren Freischnitt 341, dessen Ränder parallel zum Verlauf des oberen Kabelkanals 16 in dem Kreuzungsbereich ausgerichtet sind.

Um ein gutes Laufverhalten der Antriebskabel auch in dem Kreuzungsbereich der Kabelkanäle 16 und 18 zu gewährleisten und gleichzeitig den Platzbedarf für die Kabelkanäle 16 und 18 in dem Kreuzungsbereich gering zu halten, kreuzen sich die Kabelkanäle 16 und 18 unter einem Winkel von etwa 35°.

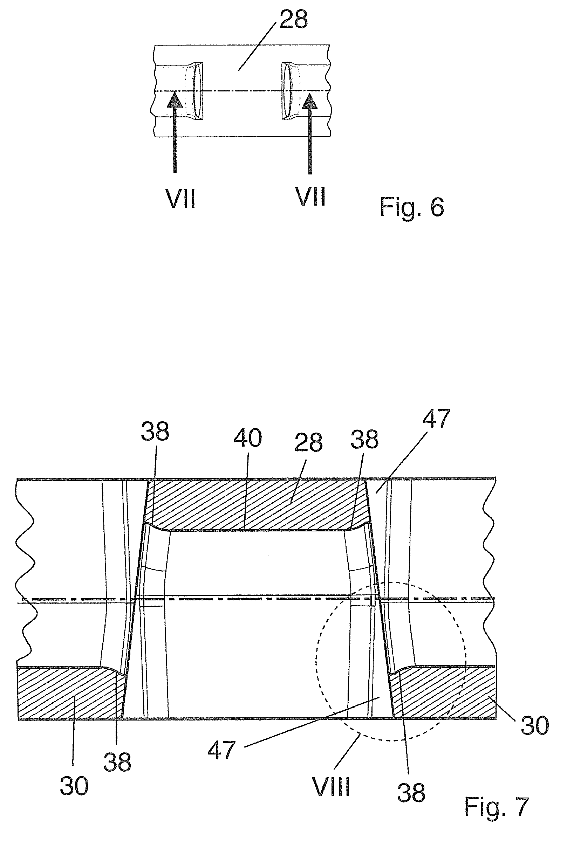

Wie den Figuren 6 bis 8 zu entnehmen ist, haben die sich alternierenden oberen Wandabschnitte 28 und unteren Wandabschnitte 30 jeweils an ihren freien Rändern eine Einlaufschräge 38, die ausgehend von einem jeweiligen teilzylindrischen bzw. im Querschnitt halbkreisförmigen Mittelbereich 40 zunächst einen ersten Krümmungsbereich 42 mit einem Krümmungsradius von etwa 1,5 mm hat, der in einen zweiten Krümmungsbereich 44 übergeht, der eine Krümmung hat, die gegenläufig zu der Krümmung des ersten Krümmungsbereichs 42 ist, und einen Krümmungsradius in axialer Richtung des jeweiligen Kabelkanals 16 bzw. 18 von etwa 0,3 mm hat. An dem Krümmungsbereich 44 schließt sich wiederum an der dem ersten Krümmungsbereich 42 abgewandten Seite in axialer Richtung des jeweiligen Kabelkanals 16 bzw. 18 ein Zylinderflächenbereich 46 an, der eine Breite von etwa 0,1 mm hat. Durch die Einlaufschräge 38 sind die durch die Wandabschnitte 28 und 30 definierten Kanalsegmente von einem Durchmesser von etwa 5,3 mm in dem Mittelbereich 40 bis zu den stirnseitigen Rändern auf einen Durchmesser von etwa 5,9 mm aufgeweitet.

Wie insbesondere Figur 7 zu entnehmen ist, haben aufeinanderfolgende obere und untere Wandabschnitte 28 und 30 miteinander fluchtende, stirnseitige Ränder, die eine Ebene aufspannen, die gegenüber einer radialen Mittelebene des jeweiligen oberen oder unteren Wandabschnitts 28 bzw. 30 mit einem Winkel von etwa 7° angestellt ist, so dass zwickelartige Entformungsflächen 47 zwischen aufeinanderfolgenden, jeweils einem Wandabschnitt 28 bzw. 30 zugeordneten Kanalsegmenten gebildet sind.

Die Mündungsbereiche 24A und 24B der Kabelkanäle 16 und 18 zu der jeweiligen, nicht dargestellten Führungsschiene sind konisch aufgeweitet, vorzugsweise ausgehend von einem Durchmesser von etwa 5,3 mm auf 7,3 mm über eine Strecke von 5,2 mm.

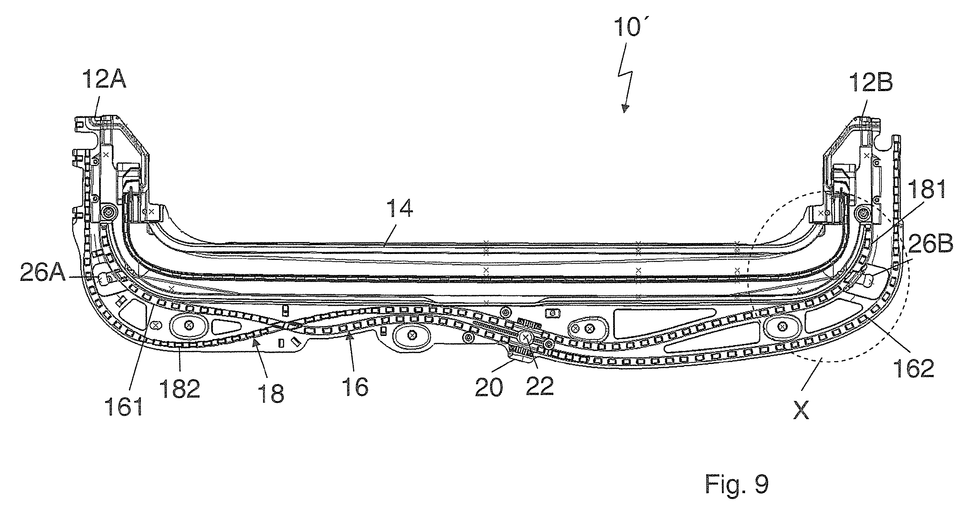

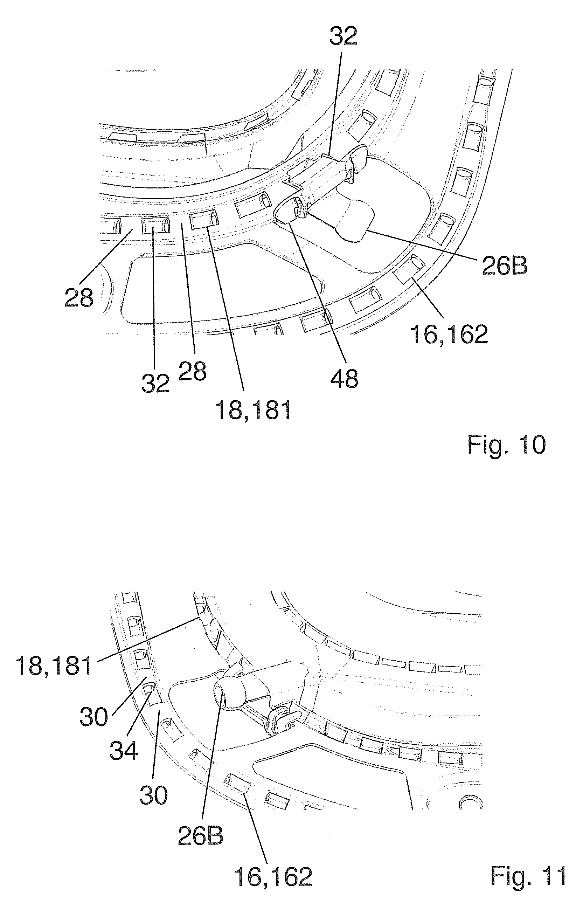

In den Figuren 9 bis 11 ist ein Rahmenvorderteil 10' dargestellt, das weitgehend demjenigen nach den Figuren 1 bis 8 entspricht, sich von diesem aber dadurch unterscheidet, dass es Wasserablaufstutzen 26A und 26B aufweist, die bezogen auf einen jeweiligen Freilaufabschnitt 162 bzw. 182 in Richtung der Dachöffnung, die mittels des Deckelelements geöffnet bzw. geschlossen werden kann, nach innen versetzt sind. Bezogen auf einen oberen Freischnitt 32, der mit dem betreffenden Wasserablaufstutzen 26A bzw. 26B fluchtet, der einem Lastabschnitt 161 bzw. 181 des betreffenden Kabelkanals 16 bzw. 18 zugeordnet ist, haben die Wasserablaufstutzen 26A und 26B jeweils eine Achse, die sich bei einer Projektion rechtwinkelig zur Ebene des Rahmenvorderteils 10 mit der Achse des mit dem betreffenden Wasserablaufstutzen fluchtenden oberen Freischnitts 32 in einem spitzen Winkel schneidet. Dieser obere Freischnitt 32 ist mit einem Abdeckelement 48 versehen, das mit dem Rahmenkörper verrastet ist und das ein Ausschlaufen des Antriebskabels aus dem Lastabschnitt 161 bzw. 181 des betreffenden Kabelkanals 16 bzw. 18 verhindert.

Im Übrigen entspricht das Rahmenvorderteil 10' zumindest weitgehend dem in den Figuren 1 bis 8 dargestellten Rahmenvorderteil.

### Bezugszeichenliste

- 10: Rahmenvorderteil
- 12A, B: freier Schenkel
- 14: Basisschenkel
- 16: Kabelkanal
- 18: Kabelkanal
- 20: Befestigungsbereich
- 22: Ausnehmung
- 24A, B: Mündungsbereich
- 26A, B: Wasserablaufstutzen
- 28: obere Wandabschnitte
- 30: untere Wandabschnitte
- 32: oberer Freischnitt
- 34: unterer Freischnitt
- 36: Kanalbrücke
- 38: Einlaufschräge
- 40: Mittelbereich
- 42: erster Krümmungsbereich
- 44: zweiter Krümmungsbereich
- 46: Zylinderflächenbereich
- 47: Entformungsflächen
- 48: Abdeckelement
- 161: Lastabschnitt
- 162: Freilaufabschnitt
- 181: Lastabschnitt
- 182: Freilaufabschnitt
- 321: oberer Freischnitt
- 341: unterer Freischnitt

## Patentansprüche

1. Rahmen eines Fahrzeugschiebedachs, das ein Deckelelement zum wahlweisen Öffnen oder Schließen einer Dachöffnung aufweist, umfassend einen Rahmenkörper (10) mit mindestens einem Kabelkanal (16, 18), der zur Führung eines drucksteifen Antriebskabels dient, das mittels einer an dem Rahmenkörper (10) gelagerten Antriebseinrichtung betätigbar ist, wobei der Kabelkanal (16, 18) so ausgebildet ist, dass das Antriebskabel in Axialrichtung des Kabelkanals (16, 18) wechselweise von einer ersten Seite mittels eines oberen Wandabschnitts (28) und von einer zweiten Seite mittels eines unteren Wandabschnitts (30) geführt ist und an der dem jeweiligen oberen Wandabschnitt (28) abgewandten Seite durch einen unteren Freischnitt (34) und an der dem jeweiligen unteren Wandabschnitt (30) abgewandten Seite durch einen oberen Freischnitt (32) freiliegt, **dadurch gekennzeichnet, dass** der Kabelkanal (16, 18) einen Lastabschnitt (161, 181) für einen belasteten Abschnitt des Antriebskabels und einen Freilaufabschnitt (162, 182) für einen auslaufenden, nicht belasteten Abschnitt des Antriebskabels aufweist und dass die Wandabschnitte (28, 30) in dem Lastabschnitt (161, 181) eine maximale axiale Länge von etwa 11 mm und in dem Freilaufabschnitt (162, 182) eine maximale axiale Länge von etwa 15 mm haben.

2. Rahmen nach Anspruch 1, **dadurch gekennzeichnet, dass** die oberen Wandabschnitte (28) und die unteren Wandabschnitte (30) jeweils an mindestens einem freien Rand mit einer Einlaufschräge (38) versehen sind, wobei die Einlaufschrägen (38) der Wandabschnitte (28, 30) jeweils ausgehend von einem jeweiligen teilzylindrischen Mittelbereich (40) über einen ersten Krümmungsbereich (42) in einen zweiten, zu dem ersten Krümmungsbereich (42) gegenläufigen Krümmungsbereich (44) übergehen.

3. Rahmen nach Anspruch 2, **dadurch gekennzeichnet, dass** der erste Krümmungsbereich (42) einen Krümmungsradius von etwa 1,0 mm bis 2,0 mm, insbesondere einen Krümmungsradius von etwa 1,5 mm hat.

4. Rahmen nach Anspruch 2 oder 3, **dadurch gekennzeichnet, dass** der zweite Krümmungsbereich (44) einen Krümmungsradius von etwa 0,1 mm bis 0,5 mm, insbesondere von etwa 0,3 mm hat.

5. Rahmen nach einem der Ansprüche 2 bis 4, **dadurch gekennzeichnet, dass** der zweite Krümmungsbereich (44) von einem Zylinderflächenbereich (46) begrenzt ist, der vorzugsweise eine axiale Breite von etwa 0,05 mm bis 0,15 mm, insbesondere von 0,1 mm hat.

6. Rahmen nach einem der Ansprüche 1 bis 5, **dadurch gekennzeichnet, dass** aufeinanderfolgende, obere und untere Wandabschnitte (28, 30) miteinander fluchtende, stirnseitige Ränder haben, die eine Ebene aufspannen, die gegenüber der Längsachse des Kabelkanals angestellt ist, vorzugsweise mit einem Winkel zwischen 5° und 9°.

7. Rahmen nach einem der Ansprüche 1 bis 6, **dadurch gekennzeichnet, dass** er zwei Kabelkanäle (16, 18) umfasst und dass sich die Kabelkanäle (16, 18) bei einer Projektion rechtwinklig zur Ebene des Rahmenkörpers (10) in einem Kreuzungsbereich kreuzen und einer der beiden Kabelkanäle (16, 18) in dem Kreuzungsbereich einen von einer Kanalbrücke (36) unterbrochenen Freischnitt (32) hat.

8. Rahmen nach Anspruch 7, **dadurch gekennzeichnet, dass** die Kanalbrücke (36) eine Achse hat, die zumindest annähernd parallel zur Achse des anderen der beiden Kabelkanäle (18) in dem Kreuzungsbereich verläuft.

9. Rahmen nach Anspruch 7 oder 8, **dadurch gekennzeichnet, dass** die Ränder des Freischnitts (32), der von der Kanalbrücke (36) unterbrochen ist, zumindest annähernd parallel zur Achse des anderen der beiden Kabelkanäle (18) in dem Kreuzungsbereich verlaufen.

10. Rahmen nach einem der Ansprüche 7 bis 9, **dadurch gekennzeichnet, dass** sich die beiden Kabelkanäle (16, 18) in dem Kreuzungsbereich unter einem Winkel von mindestens 35° kreuzen.

11. Rahmen nach einem der Ansprüche 7 bis 10, **dadurch gekennzeichnet, dass** die beiden Kabelkanäle (16, 18) bei einem parallelen Verlauf in einer Ebene, die zumindest weitgehend parallel zur Ebene des Rahmenkörpers (10) ausgerichtet ist, einen Achsabstand von mindestens 7,5 mm haben.

12. Rahmen nach einem der Ansprüche 1 bis 11, **gekennzeichnet durch** einen Wasserablaufstutzen (26A, 26B), der in einem Eckbereich des Rahmenkörpers (10) angeordnet ist und dessen Achse zumindest weitgehend rechtwinklig zur Achse eines mit dem Wasserablaufstutzen (26A, 26B) in einer Projektion fluchtenden Freischnitts (32) des Kabelkanals (18) in diesem Eckbereich verläuft.

13. Rahmen nach einem der Ansprüche 1 bis 12, **gekennzeichnet durch** ein Abdeckelement (48), das auf den Rahmenkörper (10) in einem einen Wasserablaufstutzen (26A, 26B) aufweisenden Eckbereich aufgesetzt ist und das einen zwischen zwei oberen Wandabschnitten (28) oder zwischen zwei unteren Wandabschnitten angeordneten oberen bzw. unteren mit dem Wasserablaufstutzen (26A, 26B) in einer Projektion fluchtenden Freischnitt (32) zumindest teilweise abdeckt.

14. Rahmen nach Anspruch 13, **dadurch gekennzeichnet, dass** das Abdeckelement (48) an dem Rahmenkörper (10) verrastet ist.

15. Rahmen nach einem der Ansprüche 1 bis 14, **dadurch gekennzeichnet, dass** der Rahmenkörper (10) ein nach einem Kunststoffspritzgießverfahren hergestelltes Rahmenvorderteil ist, das bezogen auf eine Rahmenlängsmittelebene beidseits jeweils an eine sich in Fahrzeuglängsrichtung erstreckende Führungsschiene grenzt, wobei zumindest einer der Kabelkanäle (16, 18) in einem Stoßbereich mit der jeweiligen Führungsschiene einen konisch aufgeweiteten Mündungsbereich (24A, 24B) aufweist.

## Claims

1. A frame of a sliding roof of a vehicle, the roof including a lid member for selectively opening or closing a roof opening, comprising a frame body (10) having at least one cable channel (16, 18) that serves to guide a drive cable which is rigid in compression, and which can be actuated by means of drive device that is supported by the frame body (10), wherein the cable channel (16, 18) is designed such that the drive cable, in the axial direction of the cable channel (16,18), is alternately guided from a first side by means of an upper wall portion (28) and guided from a second side by means of a lower wall portion (30) and, at the side facing away from the respective upper wall portion (28), is exposed by a lower cutout (34) and, at the side facing away from the respective lower wall portion (30), is exposed by an upper cutout (32) and, at the side facing away from the respective lower wall section (30) via an upper cut (32), **characterised in that** the cable channel (16, 18) comprises a load portion (161, 181) for a loaded portion of the drive cable and a free run portion (162, 182) for an unloaded exit portion of the drive cable, and **in that** the wall portions (28, 30) have a maximum axial length of approximately 11 mm in the load portion (161, 181) and have a maximum axial length of approximately 15 mm in the free run portion (162, 182).

2. The frame according to claim 1, **characterised in that** the upper wall portions (28) and the lower wall portions (30) are respectively provided with an infeed slope or entry ramp (38) at at least one free edge, wherein the infeed slopes (38) of the wall portions (28, 30), starting from a respective partially cylindrical centre region (40), via a first curvature region (42), respectively merge into a second curvature region (44), the curvature of which is opposite to the curvature of the first curvature region (42).

3. The frame according to claim 2, **characterised in that** the first curvature region (42) has a radius of radius of approximately 1.0 mm to 2.0 mm, in particular radius of curvature of approximately 1.5 mm.

4. The frame according to claim 2 or 3, **characterised in that** that the second curvature region (44) has a radius of curvature of approximately 0.1 mm to 0.5 mm, in particular approximately 0.3 mm.

5. The frame according to any one of the claims 2 to 4, **characterised in that** that the second curvature region (44) is limited by a cylinder surface region (46) which preferably has an axial width of approximately 0.05 mm to 0.15 mm, in particular 0.1 mm.

6. The frame according to any one of the claims 1 to 5, **characterised in that** successive upper and lower wall portions (28, 30) have end-face edges which are aligned with one another and which span a plane, which is inclined with respect to the longitudinal axis of the cable channel, preferably at an angle between 5° and 9°.

7. The frame according to any one of the claims 1 to 6, **characterised in that** it comprises two cable channels (16, 18) and **in that** the cable channels (16, 18), when projected at a right angle to the plane of the frame body (10), cross in a crossing region and **in that** one of the two cable channels (16, 18), in the crossing region, has a cutout (32) which is interrupted by a channel bridge (36).

8. The frame according to claim 7, **characterised in that** the channel bridge (36) has an axis which runs at least nearly parallel to the axis of the other one of the two cable channels (18) in the crossing area.

9. The frame according to claim 7 or 8, **characterised in that** the edges of the cutout (32) being interrupted by the channel bridge (36), run at least nearly parallel to the axis of the other one of the two cable channels (18) in the crossing area.

10. The frame according to any one of the claims 7 to 9, **characterised in that** the two cable channels (16, 18), in the crossing region, cross at an angle of at least 35°.

11. The frame according to any one of the claims 7 to 10, **characterised in that** the two cable channels (16, 18) have an axis distance of at least 7.5 mm when running parallel in a plane which is at least largely justified so as to be parallel to the plane of the frame body (10).

12. The frame according to any one of the claims 1 to 11, **characterised by** a water outlet connecting piece (26A, 26B) which is arranged in a corner region of the frame body (10) and the axis of which, in this corner region, runs at least largely at a right angle to the axis of a cutout (32) of the cable channel (18) which cutout is aligned with the water outlet connecting piece (26A, 26B) in a projection.

13. The frame according to any one of the claims 1 to 12, **characterised by** a cover element (48) which is placed on the frame body (10) in a corner region that includes a water outlet connecting piece (26A, 26B) and at least partially covers an upper or lower cutout (32), which is arranged between two upper wall portions (28) or between two lower wall portions and is aligned with the water outlet connecting piece (26A, 26B) in a projection.

14. The frame according to claim 13, **characterised in that** the covering element (48) is latched at the frame body (10).

15. The frame according to any one of the claims 1 to 14, **characterised in that** the frame body (10) is a frame front part produced according to a plastic injection moulding method, and which, on both sides, in relation to a longitudinal centre plane of the frame, respectively adjoins a guide rail that extends in the longitudinal direction of the vehicle, wherein at least one of the cable channels (16, 18), in an abutting region with the respective guide rail, includes an orifice region (24A, 24B) which is conically widened.

## Revendications

1. Cadre d'un toit ouvrant de véhicule, qui présente un élément de capot pour ouvrir ou fermer au choix une ouverture de toit, comprenant un corps (10) de cadre ayant au moins un conduit (16, 18) de câbles, qui sert à guider un câble d'entraînement étant résistant à la compression et pouvant être actionné moyennant un appareillage d'entraînement monté audit corps (10) de cadre, dans lequel le conduit (16, 18) de câbles est réalisé de sorte que le câble d'entraînement est guidé, dans la direction axiale du conduit (16, 18) de câbles, réciproquement d'un premier coté au moyennant une partie de paroi (28) supérieure et d'un deuxième coté au moyennant une partie (30) de paroi inférieure et, sur son coté tourné à l'opposé de la partie de paroi (28) supérieure respective, est exposé par une découpure (34) inférieure et, sur son coté tourné à l'opposé de la partie (28) de paroi inférieure respective, est exposé par une découpure (32) supérieure, et que chacune des parties (28) de paroi supérieures et les parties (30) de paroi inférieures sont munies d'une pente (38) de gorge sur au moins à un bord libre, **caractérisé en ce que** le conduit (16, 18) de câbles présente une partie (161, 181) de charge pour une partie chargée du câble d'entraînement et une partie (162, 182) de roue libre pour une partie s'écoulant et pas chargée, du câble d'entraînement, et **en ce que** les parties (28, 30) de paroi, dans la partie (161, 181) de charge, ont une longueur axiale maximale se montant à environ 11 mm et, dans la partie (162, 182) de roue libre, ont une longueur axiale maximale se montant à environ 15 mm

2. Cadre selon la revendication 1, **caractérisé en ce que** chacune des parties (28) de paroi supérieures et les parties (30) de paroi inférieures sont munies d'une pente (38) de gorge sur au moins un bord libre, dans lequel, les pentes (38) de gorges des parties (28, 30) de paroi, à partir d'une zone centrale (40) partiellement cylindrique respective, au travers une première zone (42) incurvée, chaque fois passent dans une deuxième zone (44) incurvée ayant une courbure opposée à la courbure de la première zone (44) incurvée.

3. Cadre selon la revendication 2, **caractérisé en ce que** la première zone (42) incurvée a un rayon de courbure se montant à environ 1,0 mm à 2,0 mm, en particulier un rayon de courbure se montant à environ 1,5 mm.

4. Cadre selon l'une de quelconque des revendications 2 ou 3, **caractérisé en ce que** la deuxième zone (44) incurvée a un rayon de courbure se montant à environ 0,1 mm à 0,5 mm, en particulier à environ 0,3 mm.

5. Cadre selon l'une quelconque des revendications 2 à 4, **caractérisé en ce que** la deuxième zone (44) incurvée est délimitée par une zone de surface (46) cylindrique, qui a, de préférence, une largeur axiale se montant à environ 0,05 mm à 0,15 mm, en particulier se montant à 0,1 mm.

6. Cadre selon l'une quelconque des revendications 1 à 5, **caractérisé en ce que** des parties (28, 30) de paroi supérieures et inférieures consécutives ont des bordures frontales étant mutuellement alignées les une avec l'autres, qui déploient un plan, qui est incliné par rapport à l'axe longitudinal du canal de câbles, de préférence sous un angle entre 5° et 9°.

7. Cadre selon l'une quelconque des revendications 1 à 6, **caractérisé en ce que** ledit cadre comprend deux conduits (16, 18) de câbles et **en ce que** les conduits (16, 18) de câbles, en cas d'une projection à angle droit par rapport au plan du corps (10) de cadre, se croisent dans une zone de croisement et l'un des deux conduits (16, 18) de câbles, dans la zone de croisement, a un découpure (32) interrompue par un pont (36) de conduit.

8. Cadre selon la revendication 7, **caractérisé en ce que** le pont (36) de conduit a un axe qui est, du moins approximativement, parallèle à l'axe de l'autre conduit de câbles des deux conduits (18) dans la zone de croisement.

9. Cadre selon l'une quelconque des revendications 7 ou 8, **caractérisé en ce que** les bordures de la découpure (32), qui est interrompue par le pont (36) de conduit, sont parallèle, du moins approximativement, à l'axe de l'autre conduit de câbles des deux conduits (18) de câbles dans la zone de croisement.

10. Cadre selon l'une quelconque des revendications 7 à 9, **caractérisé en ce que** les deux conduits (16, 18) de câbles se croisent dans la zone de croisement sous un angle d'au moins de 35°.

11. Cadre selon l'une quelconque des revendications 7 à 10, **caractérisé en ce que** les deux conduits (16, 18) de câbles, en étant parallèles dans un plan qui est orienté, du moins en grande partie, de façon à être parallèle au plan du corps (10) de cadre, ont un entraxe se montant à au moins 7,5 mm.

12. Cadre selon l'une quelconque des revendications 1 à 11, **caractérisé par** une tubulure (26A, 26B) d'évacuation d'eau, qui est disposée dans une zone de coin du corps (10) de cadre et l'axe de laquelle est du moins en grande partie à angle droit par rapport à l'axe d'une découpure (32) du conduit (18) de câbles dans ladite zone de coin, ladite découpure étant alignée avec la tubulure (26A, 26B) d'évacuation d'eau dans une projection.

13. Cadre selon l'une quelconque des revendications 1 à 12, **caractérisé par** un élément (48) de recouvrement, qui est posé sur le corps (10) de cadre dans une zone de coin présentant une tubulure (26A, 26B) d'évacuation d'eau et qui recouvre, du moins en partie, un découpure (32) supérieure ou inférieure disposée entre deux parties (28) de paroi supérieures ou entre deux parties de paroi inférieures et étant alignée avec la tubulure (26A, 26B) d'évacuation d'eau dans une projection.

14. Cadre selon la revendication 13, **caractérisé en ce que** l'élément (48) de recouvrement est enclenché au corps (40) de cadre.

15. Cadre selon l'une quelconque des revendications 1 à 14, **caractérisé en ce que** le corps (10) de cadre est un devant de cadre produit selon un procédé de moulage par injection plastique, qui, relativement à un plan central longitudinal du cadre, de part et d'autre, avoisine un rail de guidage s'étendant dans la direction longitudinale du véhicule, dans lequel au moins l'une des conduits (16, 18) de câbles, dans une zone de jonction avec le rail de guidage respectif, présente une zone (24A, 24B) débouchante étant évasée de façon conique.
